# EUROPEAN PATENT APPLICATION

(11) **EP 0 540 327 A1**
(43) Date of publication of application: **05.05.1993**
(21) Application number: 92309909.7
(22) Date of filing: 29.10.1992
(51) Int. Cl.: H01H 85/25, H02B 11/02

(54) **Cut-out with isolation switch**

(30) Priority: 30.10.1991 GB 9123073; 11.02.1992 GB 9202857
(71) Applicant: Mew, Raymond, Anglesey, Gwynedd LL6H 9NB (GB); Mew, Jeanette, Anglesey, Gwynedd LL6H 9NB (GB)
(72) Inventor: Mew, Raymond, Anglesey, Gwynedd, LL6H 9NB, Wales (GB)
(74) Representative: Lawrence, John

(57) **Abstract**

It is known to provide isolation switches for street lighting as a separate add-on feature. In the present invention, a switch (1) comprises first and second components, one of these components incorporating a cut-out unit (3) for street furniture. Access-controlling means is provided that requires the first component to be moved in a first direction (A) and subsequently in a second direction (B) in order to obtain access to the electrical components of the cut-out unit (3).

## Description

This invention relates to switches.

There are many known switches.

According to one aspect of the invention, we provide a switch having a first member and a second member movable between a closed condition in which the switch is closed and an open condition in which the switch is open, one of the members incorporating a cut-out unit for street furniture.

Preferably, the switch is a double pole switch and has double pole isolation.

Previously, isolation switches for street lighting have been separate, add-on, elements, rather than the entire cut-out unit being part of the isolation switch.

Preferably, the cut-out unit is on the movable element of the switch.

According to a second aspect of the invention, we provide a switch comprising a first component having an associated contact element, a second component having an associated contact element, first and second components having a first, closed, condition in which the contact elements make contact and the switch is closed, and a second, open, condition in which the contact elements do not make contact, and in which the switches are open; in which the first element is associated with a cut-out unit for an electrical apparatus, the cut-out unit having a cover member which is releasably mounted on the cut-out unit and which prevents access to the electrical components of the cut-out unit when in a covering position, and in which access-controlling means is provided to ensure that the covering member is held in its covering position when the switch is closed, the access-controlling means releasing the cover member for removal from the cut-out unit when the first component is moved to its open position, thereby allowing the cover to be removed from the cut-out unit only when the switch is open.

This ensures that the cut-out unit is isolated from the electrical supply at all times when the cover member is removed.

Preferably, the cut-out unit is mounted on a movable component of the switch.

Preferably, the first component comprises a mounting, or sole, plate for at least some of the electrical components of the cut-out unit. The second component may comprise a housing for the cut-out unit. Preferably, the access-controlling means is released by moving the first component in a first direction and subsequently moving it in a second, different, direction. The first and second directions may be substantially at right angles.

The first component may be spring-biassed to its open condition. The first component may be spring-biassed in the direction opposite to said first direction.

The first component may be pivoted. The first component may move linearly from its open to its closed condition.

The second component may be provided with guide means which co-operates with guided means provided on the second component so as to positively guide the second component from its first condition to its second condition.

It will be appreciated that the access-controlling means comprises safety means provided in order to ensure that the cover member cannot be removed from the sole plate until the isolation switch has been opened.

Second safety means may be provided to ensure that the first component cannot be moved accidentally from its open condition to its.closed condition without the cover member being in its covering position.

Preferably, the second safety means requires the cover member to be in its closed position before the first component can be moved by hand relative to the second component. The second safety means may comprise a further aspect of the invention, independently of the other aspects.

According to a third aspect of the invention we provide a switch having first and second relatively movable components, a cover member adapted to cover electrical components of the switch, and an interlock mechanism provided between the cover member and another structure, the interlock mechanism preventing the first and second components from moving relative to each other so as to close the switch unless the cover member is in position.

Preferably one of the components mounts a cut-out unit. Preferably the interlock is provided between the other component and the cover member.

Embodiments of the invention will now be described by way of example only, with reference to the accompanying drawings, of which:-
Figure 1 is a schematic side cross-section of a switch incorporating a cut-out unit for use in street lighting;
Figure 2 is a schematic view at right angles to the section of Figure 1 of the switch;
Figure 3 shows schematically detail of an interlock mechanism provided on the switch of Figures 1 and 2;
Figure 4 shows schematically the interlock mechanism of Figure 3 in its closed position;
Figure 5 shows the interlock mechanism of Figure 3 as seen on line V-V;
Figures 6 and 7 show schematically two further switches;
Figure 8 shows a side view of a housing unit according to a further embodiment of the invention;
Figure 9 shows a plan view of the housing of Figure 8; and
Figure 10 shows a plan view of a cover for use with the housing of Figures 8 and 9.

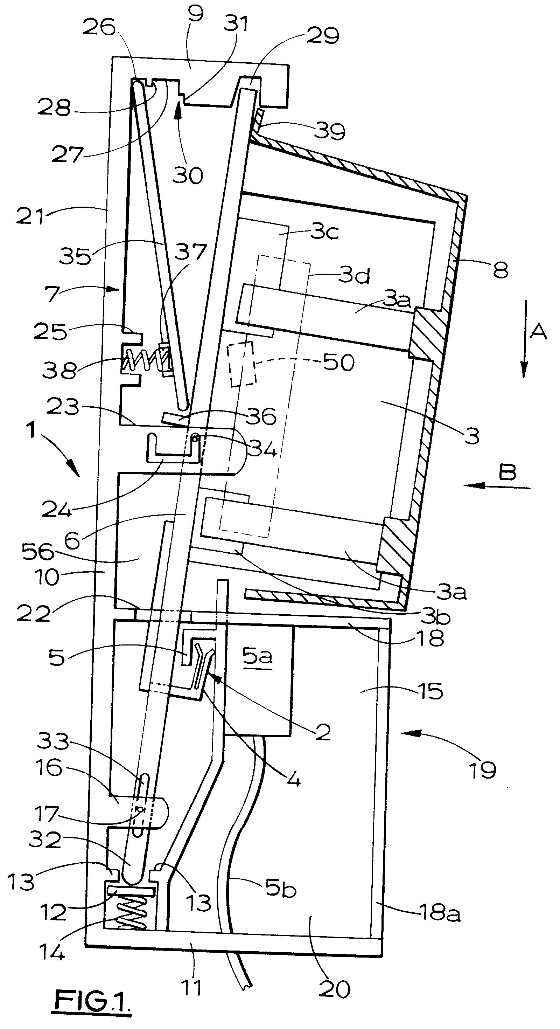

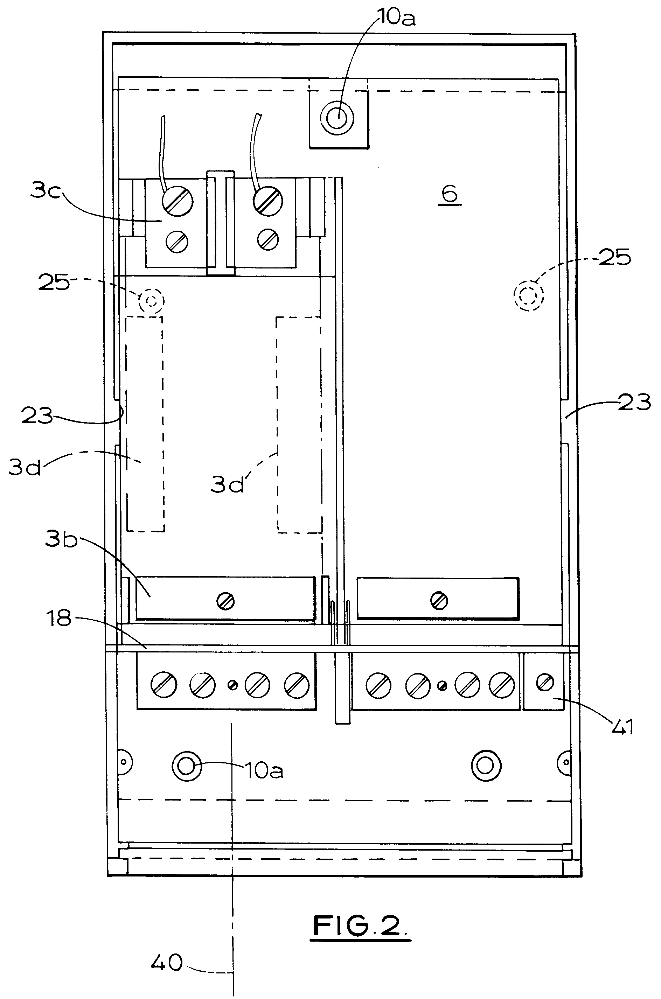

A lamp-post, road sign, bollard, motorway sign, or other electrically-powered street furniture (not shown) incorporates a switch unit 1 (shown in Figures 1 and 2) between its power supply and its light. The switch unit 1 comprises an isolation switch 2 and a cut-out unit 3. The isolation switch 2 has a first, pronged, element 4 and a second, co-operating, L-shaped element 5. The element 5 is connected to a power input unit 5a which is fed power via cable 5b.

The pronged switch element 4 is mounted on a mounting, or sole, plate 6 (comprising a first element) which is movable relative to a housing unit 7 (comprising a second element). The sole plate is movable relative to the housing 7 between the open position shown in Figure 1 and a closed position in which the switch element 5 is received between the prongs of the switch element 4 and makes contact with them. A cover member 8 is secured (for example by screws) to the sole plate 6 and covers the electrical components of the cut-out unit 3 so as to prevent access to them. The cut-out unit 3 has a pair of contact pins 3a which make contact with power input and output terminals 3b and 3c. A fuse 3d connects the pins 3a.

The housing 7 has a top flange 9, a back panel 10, and a base flange 11. A spring-biassed plate 12 is provided in the region of the junction of the back panel 10 and base flange 11 and is urged towards restraining lugs 13 by a spring 14. The back panel 10, or side panels 15, have projecting lugs 16 provided with pins 17. A wall 18 extends away from the back panel 10 and divides the housing 7 into a lower region 19 which has a closure panel 18a to close it off and to prevent access to a chamber 20 by unauthorised personnel, and an upper region 21 in which the cover member 8 is disposed. The closed chamber 20 is very useful for "public" supply cut-outs since the electricity board may have their own closure or seals. The wall 18 has a slot 22 through which the sole plate 6 extends. The back panel 10 has mounting holes 10a.

The upper region 21 of the housing has a pair of projecting lugs 23 provided with C-shaped slots 24. A locating well 25 is provided on the back plate 10.

The top flange 9 has a first groove 26 which is separated from a second groove 27 by a projecting rib 28, and a third groove 29 disposed towards the furthermost portion of the top flange 9 from the back plate 10. The second groove 27 has a notch or recess 30 which is defined in part by a shoulder 31.

The sole plate 6 has a lower end 32, which rests against the plate 12 and is urged upwards by it, an elongate groove 33 in which the pin 17 is received, and pins 34 received in the C-shaped slots 24 of the lugs 25. A biassing member 35 has one end received in the groove 26 and its other end lodged in a notch defined between the sole plate 6 and a projection 36 extending away from the sole plate. The biassing member 35 has a locating well 37. A spring 38 is received in the two wells 25 and 37 and urges the lower end of the biassing member 35 away from the back panel 10.

The cover member 8 is held to the sole plate 6 by externally accessible screws (not shown). In the open configuration shown in Figure 1, the screws which hold the cover member 8 to the sole plate 6 can be unscrewed and the cover 8 can be removed to allow access to the cut-out unit 3. It will be noted that the isolation switch 2 is in its open configuration. It will also be noted that an upwardly-directed flange 39 of the cover member is not located by part of the housing when the switch is in its open configuration.

To move the switch to its closed configuration the user screws the cover member 8 back onto the sole plate 6, covering its associated electrical components, pushes the cover member 8 down in the direction of arrow A, which moves the plate 12 down against the action of the spring 14, and moves the pin 34 to the bottom of the vertical channel of the C-shaped slot 24, and then pushes the cover member in towards the back panel 10 in the direction of arrow B. This moves the pin 34 along the horizontal portion of the C-shaped slot 24. The user then moves, or allows to be moved, the plate 6 upwards, so that the pin 34 is received at the top end of the vertical portion of the slot 24, which is nearest to the back panel 10, and so that the top end of the sole plate 6 is received in the groove or channel 27, with the flange 39 of the cover member being received in the notch 30. The shoulder 31 then overlays a portion of the flange 39 and the cover member cannot be removed from the sole plate, even when its securing screws are removed.

During the movement of the sole plate 6 described above, the pronged switch element 4 associated with the sole plate moves first of all downwardly in the direction of arrow A to a position in which the top edge of the prongs is below the bottom edge of the L-shaped switch element 5, then as the sole plate 6 is pivoted towards the back panel 10 the prongs of the switch element 4 move to a position in which they are beneath the switch element 5, then as the sole plate 6 rises upwards the switch element 5 is received between the prongs of the switch element 4.

The action of closing the isolating switch 2 simultaneously operates the safety means provided between the shoulder 31 and the flange 39, so that the cover member 8 cannot be removed when the switch 2 is closed. In order to remove the cover member 8 (and thereby gain access to the electrical components of the cut-out 3) the sole plate 6 must be swung to the position shown in Figure 1 which automatically results in the switch 2 being moved to its open position.

Figure 2 shows that the switch 1 has two power output terminals 3c, and two cartridge fuses 3d, and so can supply power to two electrically-powered devices. If the power input terminal 3b were split into two on line 40 the switch could be used to loop a supply line.

The switch 1 has double pole isolation: it isolates the live and neutral terminals from the supply. The housing unit 7 may include PME (Protective Multiple Earthing), whether switched or unswitched, and has an additional earth terminal 41 in the closed chamber 20. The housing can also accept a miniature circuit breaker instead of the fuses 3d. By changing the block of terminals in the chamber 20 the switch can be converted from barrel-type to lug-type terminals.

Since the switch is double pole isolating we arrange for there to be a lead lag on the neutral pin of the cut-out. The neutral pin is the last contact to break and the first contact to make. This avoids capacitance build-up during making/breaking of the circuit and reduces arcing.

It will be appreciated that having the cut-out unit 3 on a component of the isolation switch 2 means that the isolation switch does not occupy space in the cut-out unit.

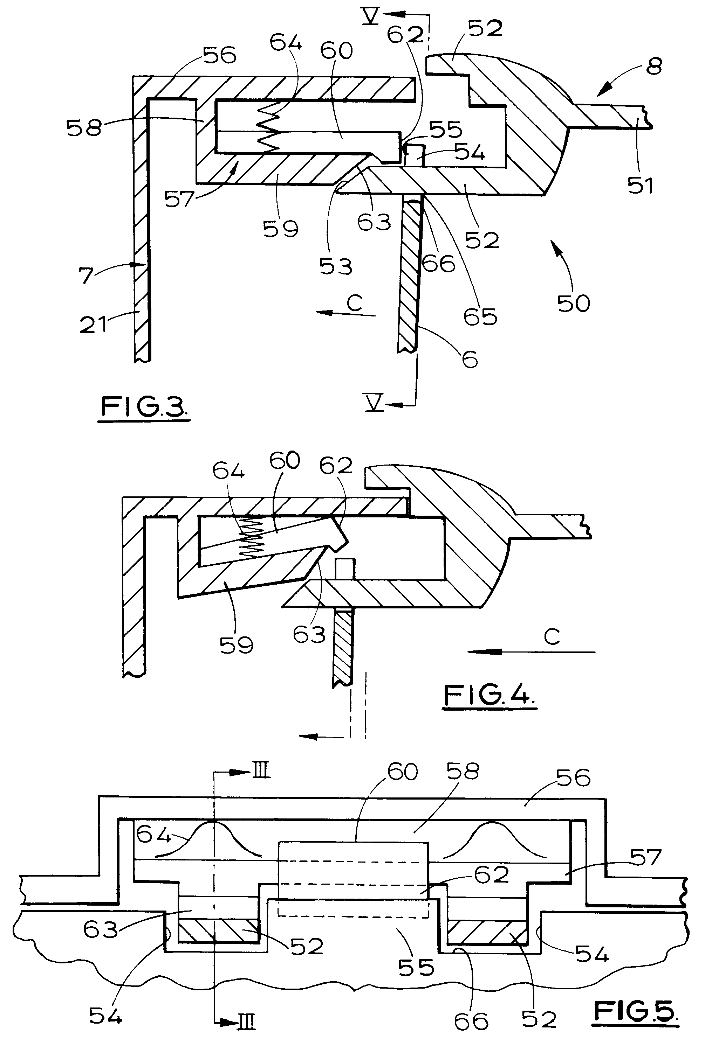

Figures 3 to 6 show details of a cover member/housing interlock safety mechanism 50 (schematically shown on Figure 1). The interlock mechanism 50 prevents movement of the sole plate 6, and the switch 2, back towards the closed position when the cover member is not mounted on the sole plate.

The cover member 8 is integrally moulded in plastics materials and has side walls 51 provided with a lip 52 and, at an interlock region, with a camming finger 52 provided with a cam surface 53.

The side surfaces of the sole plate 6 are provided with a pair of notches 54 and an abutment region 55.

The housing 7 has side walls 56 provided at an interlock region with an internal flange 57 connected to the wall 56 by a connection portion 58. The flange 57 has in a longitudinally arranged sequence a first cam portion 59, an abutment portion 60, and a second cam portion 61. The abutment portion 60 has an obstructing face 62 and comprises a stepped region of the continuous flange 57. The cam portions 59 and 61 have cam surfaces 63 which face the cam surfaces 53 of the fingers 52. Springs 64 urge the cam portions 59 and 61 away from the wall 56.

Figure 3 shows the interlock mechanism in its obstructing configuration, with the sole plate in its open position. The sole plate 6 cannot move in the direction of arrow C because its abutment region 55 engages against the obstructing face 62 which prevents movement towards the back panel 21. The switch 2 therefore cannot be closed. Pushing the sole plate 6 without the cover member 8 in place is no help.

When the cover member 8 is in place and is itself pushed in the direction of arrow C, the cam surfaces 53 of the camming fingers 52 engage the cam surfaces 63 of the flange 57. Side faces 65 of the fingers 52 engage against faces 66 of the notches 54 and are restrained from transverse movement by those faces 66. As the cover member is pushed in the cam portions 59 and 61 are bent towards the side walls 56, compressing the springs 64. Since the abutment portion 60 is integral with the cam portions this too is moved out of the way towards the wall 56. The obstructing face 62 no longer obstructs the sole plate 6 and the cover member and sole plate move to their closed positions, closing the switch 2. Figure 4 shows the interlock in its closed position.

When the cover member 8 and the sole plate 6 are removed the springs 64 return the flange 57 to its obstructing, protruding, position shown in Figure 3.

The cover member is needed for the switch to be closed. The interlock is between part of the cover moulding and the housing, not any separate, loose, component of either which could become lost or mis-orientated.

The switch 1 shown in Figures 1 and 2 pivots towards the bottom of the sole plate, but we could arrange for the pivoting to occur at some other place, for example above the isolation switch 2. The pivoting may occur in the upper region of the housing.

Alternatively, instead of pivoting the sole plate 6, we may move it bodily in two different directions, which may be at right angles, for example a horizontal direction and a vertical direction. A leaf spring may be provided between the back panel and the sole plate.

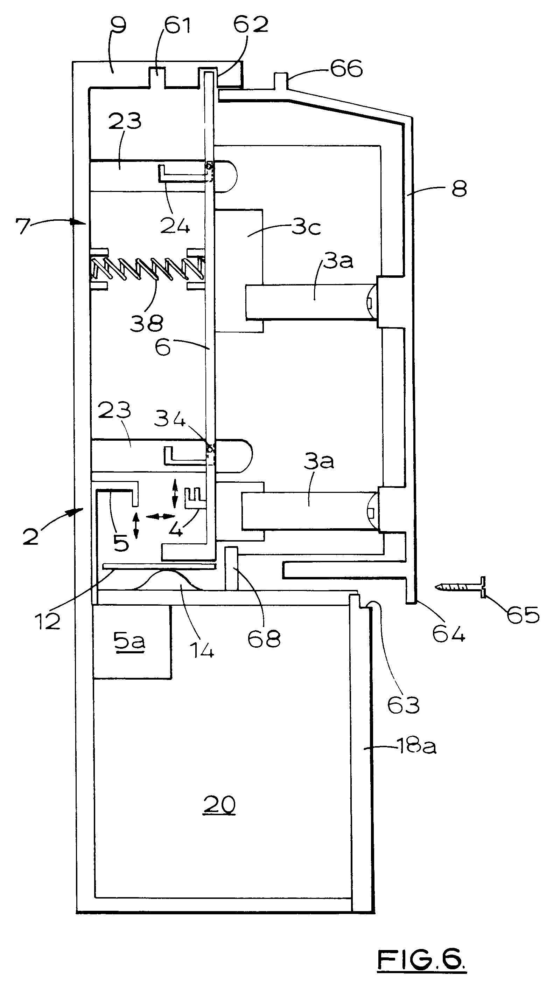

An example of a linearly-moving switch is shown in Figure 6. Many of its structures are similar to those of the switch of Figure 1 and similar structures have been given the same reference numbers.

The flange 9 has two transversely-spaced grooves 61 and 62 which receive the sole plate 6 in its closed and open positions respectively. There are two pairs of projecting lugs 23 with guide slots 24. The wall 18a has a notch 63 adapted to receive a bottom lip 64 of the cover member 8 when the cover member is in its closed position. The cover member is screwed to the housing 7 in the region of the lip 64 by screws 65. The top wall of the cover member has a projecting rib 66 which is received in groove 62 when the cover member is in its closed position. The engagement of the lip 64 in recess 63, and of a leading portion 67 of the cover member against a stop 68 provided on the housing, arrest the horizontal, transverse, movement of the cover member at the inward position. The user then knows to move the housing up, or allow it to move up under the action of the spring 14.

We prefer to move the housing 8mm down, 8mm across and 8mm up to effect closure of the switch 2. This ensures sufficient clearance of the contact elements.

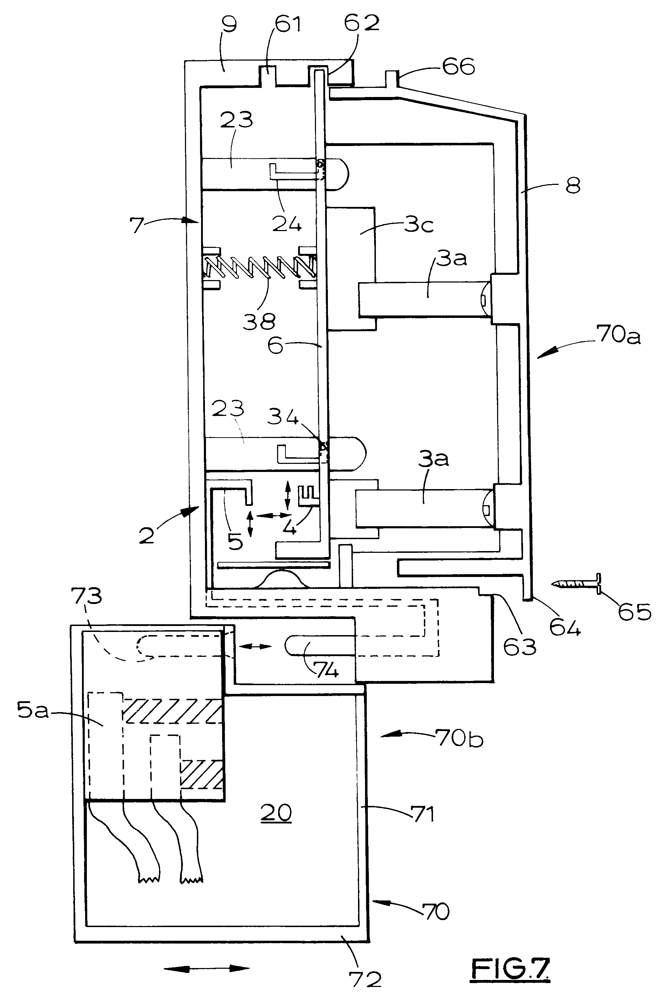

Figure 7 shows yet another switch which is similar in many ways to that of Figure 6. Similar components have been given the same reference numerals.

The major difference between the switches of Figures 6 and 7 is that in the arrangement of Figure 7 the switch comprises a two unit device comprising a switch unit 70a and a power supply unit 70b. The chamber 20 is defined by a separate self-contained box 70 which can be removed from the switch. The box 70 has a removable cover 71 (which may need special tools to remove it), a gland plate 72, and a main electrical terminal block 5a. The block 5a has female electrical connectors 73 which releasably co-operate with male electrical connectors 74 provided associated with the switch unit 70a. The connectors 74 are electrically connected to the prong 5.

It will be appreciated that the cover member itself is the part of the switch which the user moves to operate the switch.

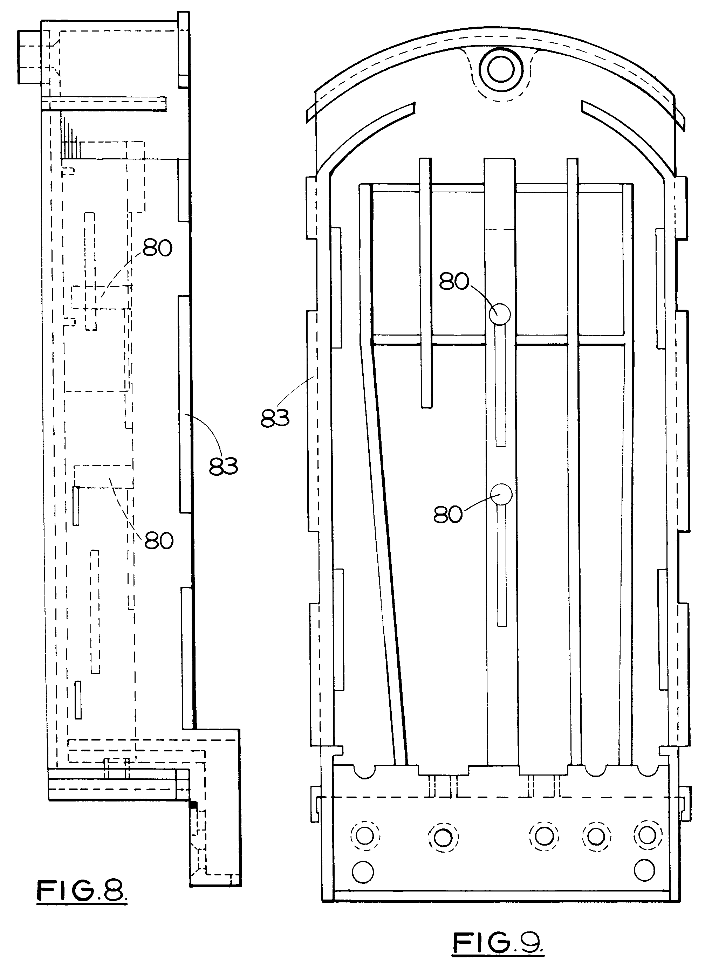

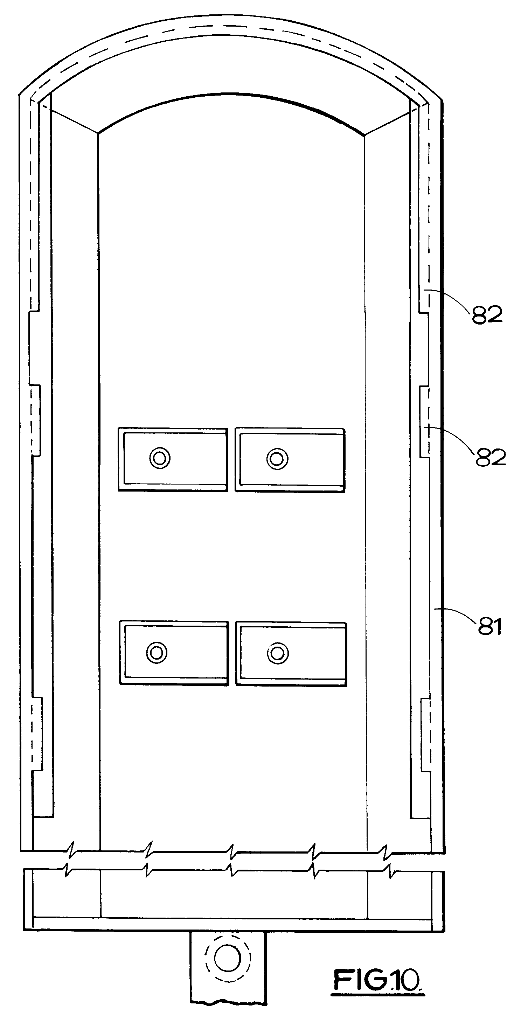

In a further embodiment (Figures 8-10) the interlock is provided by way of buttons 80 below the sole plate (not shown). The cover 81 is provided with extended pins. The cover is located in an open position over the housing unit by means of co-operating tabs 82, 83 on the cover 81 and housing unit 84.

In the open position as the cover is pushed onto the housing unit the pins extend through holes in the sole plate located above the buttons and engage with the buttons. The cover is pushed into position until the tabs 82 on the cover are beyond the tabs 83 on the housing unit. The cover is then slid into a closed position. The pins co-operate with the sole plate to move it into the locked position. Thus it can be seen that this embodiment requires only two discrete movements, rather than the three required by the previous embodiments.

This embodiment may conveniently be used with a separate terminal block, as discussed in relation to the embodiment of Figure 7.

In all the embodiments described a number of common requirements are met. These include the presence of Double Pole Switched Isolation with neutral lead lag, and the facility for the unit to lock in the "off" position, such a position being clearly indicated, while mechanical actuation is necessary prior to switching. All the accessible contact parts are to be electrically safe at all times, that is it is not possible to access any live terminals at any time and the insertion of a fuse or similar protective device is impossible under load conditions.

When the unit is installed and in operation in street furniture, they will be subject to moisture which may condense in the upper parts and electrically conductive dust such as rust flakes, which may accumulate in the street furniture enclosures. The load carrying cable entries are at at least 30° to the horizontal to prevent condensation travelling along the cable into the fuse unit.

The unit incorporates a facility whereby the electricity supply companies incoming feed cables can be sealed and identified and the fuse switching unit can be demountable from the supply companies termination.

In the "on" position the fuse carrier is passively captive over 75% of its area.

The unit may have triangular three point fixings external to current carrying cavities. The function of all terminals is clearly indicated by permanent means.

A cable termination box or cover may be available for the protection of incoming cables. It may be an integral part of the unit or it may interlock into the base of the unit so that the box or cover cannot be removed until the isolation switch is in the "off" position.

The box or cover may have a split gland plate to accommodate the incoming service supply cable and the loop feed cable to enable work to occur on one without disruption to the other.

The unit may be manufactured from a high impact resistant non-hydroscopic material, preferably ABS flame retardant or similar.

Preferably no terminal shrouds are to be incorporated within the unit.

The means provided for clamping the fuse link do not interfere with the requirement that constant pressure is to be maintained between the fused contacts and fixed terminals. Undue force is not required to withdraw the fuse carriers from the bases.

If required the fuse carriers can accommodate an outgoing fused loop supply from the lower terminal chamber, or two fused outgoing terminals.

All outgoing load terminals are fixed, and the unit accommodates an internal earth terminal for outgoing earth connections.

The unit may also have facilities for commissioning, and performing operational and maintenance testing which allows all the relevant tests to be executed without disconnection of outgoing or incoming cables. If necessary, the unit may also facilitate visual indication of the status of the incoming supply and/or the integrity of the fuse.

All of the component parts of the isolation switch/protection unit maybe fully interchangeable, and further may be interchangeable without disruption to the supply authorities' incoming terminations.

## Claims

1. A switch (1) has a first component and a second component movable between a closed condition in which the switch (1) is closed and an open condition in which the switch (1) is open, characterised in that one of the members incorporates a cut-out unit (3) for street furniture.

2. A switch (1) comprises a first component having an associated contact element (4), a second component having an associated contact element (5), said first and second components having a first, closed, condition in which the contact elements (4, 5) make contact and the switch (1) is closed, and a second, open, condition in which the contact elements (4, 5) do not make contact, and in which the switch (1) is open; characterised in that the first element (4) is associated with a cut-out unit (3) for an electrical apparatus, the cut-out unit (3) having a cover member (8) which is releasably mounted on the cut-out unit (3) and which prevents access to the electrical components of the cut-out unit (3) when in a covering position, and in that access-controlling means is provided to ensure that the covering member (8) is held in its covering position when the switch (1) is closed, the access-controlling means releasing the cover member (8) for removal from the cut-out unit (3) when the first component is moved to its open position, thereby allowing the cover (8) to be removed from the cut-out unit (3) only when the switch (1) is open.

3. A switch (1) according to either claim 1 or claim 2, characterised in that the cut-out unit (3) is on the moveable element of the switch (1).

4. A switch (1) according to claim 2, characterised in that the first component comprises a mounting, or sole, plate (6) for at least some of the electrical components of the cut-out unit (3).

5. A switch (1) according to claim 2, characterised in that the second component comprises a housing (7) for the cut-out unit (3).

6. A switch (1) according to claim 2, characterised in that the access-controlling means is released by moving the first component in a first direction and subsequently moving it in a second, different, direction.

7. A switch (1) according to any of claims 2 to 6, characterised in that the second component may be provided with guide means (24) which cooperates with guide means (34) provided on the first component so as to positively guide the second component from its first condition to its second condition.

8. A switch (1) according to any of claims 2 to 7, characterised in that safety means (50) ensures that the first component cannot be moved accidentally from its open condition to its closed condition without the cover member (8) being in its covering position.

9. A switch (1) according to claim 8, characterised in that the safety means (50) requires that the cover member (8) be in its closed position before the first component can be moved relative to the second component.

10. A switch (1) comprises first and second relatively movable components, a cover member (8) adapted to cover electrical components of the switch (1), and an interlock mechanism (50) provided between the cover member (8) and another structure, characterised in that the interlock mechanism (50) prevents the first and second components from moving relative to each other so as to close the switch (1) unless the cover member (8) is in position.
